# EUROPEAN PATENT APPLICATION

(11) **EP 1 580 044 A1**
(43) Date of publication of application: **28.09.2005**
(21) Application number: 05075629.5
(22) Date of filing: 16.03.2005
(51) Int. Cl.: B60G 11/113, B60G 11/46, B60G 13/00

(54) **Connection between a wheel axle of a vehicle and a said wheel axle carrying trailing arm**

(30) Priority: 25.03.2004 NL 1025811
(71) Applicant: WEWELER NEDERLAND B.V., 7332 AP Apeldoorn (NL)
(72) Inventor: Aalderink, Derk Geert, 7245 NV Laren (NL); de Zeeuw, Maarten Peter, 6836 LH Arnhem (NL)
(74) Representative: Iemenschot, Johannes Andreas

(57) **Abstract**

A connection between an axle body of a wheel axle of a vehicle and an axle carrying arm (9) which extends in the longitudinal direction of the vehicle and crosses the axle body substantially at right angles comprises a supporting plate (11) which is mounted on the carrying arm on the side of the carrying arm remote from the axle body, and clamping means which fixedly connect the supporting plate (11), the carrying arm (9) and the axle body to one another. The connection furthermore comprises a shock absorber attachment part (21) on the side of the supporting plate (11) for attaching a shock absorber (8). The shock absorber attachment part (21) comprises two lips (22) which are at a distance from one another. The shock absorber attachment part (21) is a separate component which is formed by the two lips (22) and a plate-shaped part (27) on which the two lips are fixedly fastened. The plate-shaped part (27) is designed to be clamped between the carrying arm (9) and the supporting plate (11).

## Description

The invention relates to a connection between an axle body of a wheel axle of a vehicle and an axle carrying arm which extends in the longitudinal direction of the vehicle and crosses the axle body substantially at right angles, comprising a supporting plate which is mounted on the carrying arm on the side of the carrying arm remote from the axle body, and clamping means which connect the supporting plate, the carrying arm and the axle body securely to one another, the connection furthermore comprising a shock absorber attachment part on the side of the supporting plate for attaching a shock absorber, which shock absorber attachment part comprises two lips which are at a distance from one another and are each provided with a bore, said bores having a common centre axis.

A connection of this type is known from, for example EP-A-1 088 687. With this known connection, the lips for attaching a shock absorber form an integral part of the supporting plate. However, this has the drawback that high internal material stresses may develop in the lips when the shock absorber is being mounted which may subsequently cause them to break. During installation of the connection, the clamping means clamp the supporting plate, the carrying arm and the axle body tightly together. During this process, the supporting plate may deform to such a degree, that the lips for attaching the shock absorber become slightly spaced apart. During the subsequent installation of the shock absorber, the lips are pulled towards each other by a fastening bolt which extends through the bores in the lips, resulting in the abovementioned stresses.

It is an object of the invention to overcome this drawback.

With a connection of the type mentioned in the introduction according to the invention, this object is achieved in that the shock absorber attachment part is a separate component which is formed by the two lips and a plate-shaped part on which the two lips are fixedly fastened and in that the plate-shaped part is designed to be clamped between the carrying arm and the supporting plate.

With the connection according to the invention, a deformation of the supporting plate during the installation of the connection does not have any effect on the position of the lips for attaching the shock absorber, so that no or much lower internal material stresses occur in the lips during installation of the shock absorber. The connection has other advantages as well. As the shock absorber attachment part is a separate component, different shock absorber attachment parts corresponding to different positions of the absorber can be used with the same supporting plate. As a result, the supporting plate can be used more widely. Furthermore, the surface treatments for the supporting plate and the shock absorber attachment part can be different, which may be an advantage in practice.

Preferred embodiments of the connection according to the invention are defined in the dependent claims.

In the following description of a specific embodiment of the connection according to the invention, the invention will be explained with reference to the drawing, in which:
Fig. 1 shows a side view of a wheel axle suspension with pneumatic spring system of a vehicle, mounted on a chassis beam of a vehicle, in which the connection according to the invention has been used,
Fig. 2 shows, on an enlarged scale, the supporting plate and the plate-shaped part of the connection according to the invention together with a part of the carrying arm and a part of the shock absorber of the wheel axle suspension of Fig. 1,
Fig. 3 shows a perspective plan view of the supporting plate and the plate-shaped part of the connection according to the invention,
Fig. 4 shows a perspective bottom view of the supporting plate and the plate-shaped part,
Fig. 5 shows a perspective plan view of the plate-shaped part on its own.

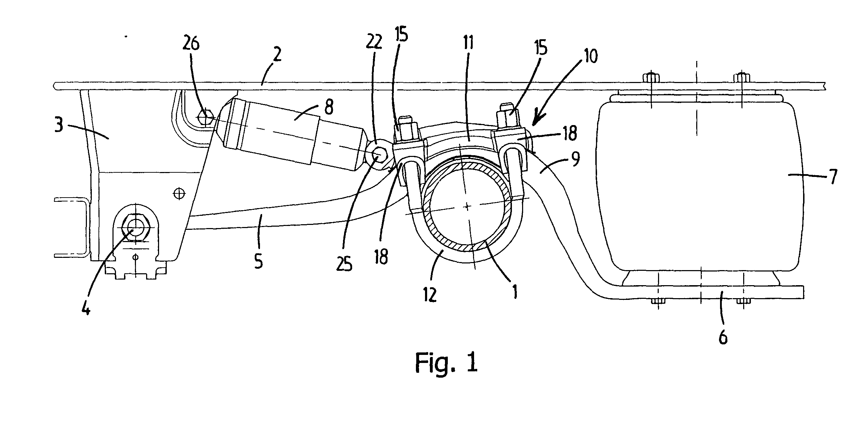

Fig. 1 shows a side view of a wheel axle suspension with pneumatic spring system of a vehicle, in which the connection between the axle body of the wheel axle and the carrying arm of the wheel axle are designed according to the invention.

In Fig. 1, the axle body of the wheel axle is designated by the reference numeral 1. The wheel axle suspension shown comprises a carrying bracket 3 to be attached to the chassis beam of a vehicle, which is illustrated highly diagrammatically in Fig. 1 and indicated by the reference numeral 2, a carrying arm 5 pivotably fastened to the carrying bracket 3 at the attachment point 4, a pneumatic spring 7 arranged between the free end part 6 of the carrying arm 5 situated at a distance from the attachment point 4 and the chassis beam 2, and a shock absorber 8 fitted between the carrying bracket 3 and the carrying arm 5.

The carrying arm 5, which crosses the axle body 1 substantially at right angles, has an upwardly curved section 9 at the location of the axle body. The axle body 1 is arranged on the underside of the carrying arm in the cavity of the curved section 9 and is connected to the carrying arm 5 by means of a connection according to the invention which is to be described in greater detail below and which is generally denoted by the reference numeral 10.

Mounting the axle body on the underside of the carrying arm 5 has the advantage that space is created, for example for installing a brake system on the wheel body 1. However, the invention is not limited to a system in which the axle body is mounted on the underside of the carrying arm.

The connection 10 comprises a supporting plate (strap plate) 11 and two standard U-shaped brackets (straps) 12 which interact with the supporting plate 11 in order to fixedly connect the supporting plate 11, the carrying arm 5 and the axle body 1 to one another.

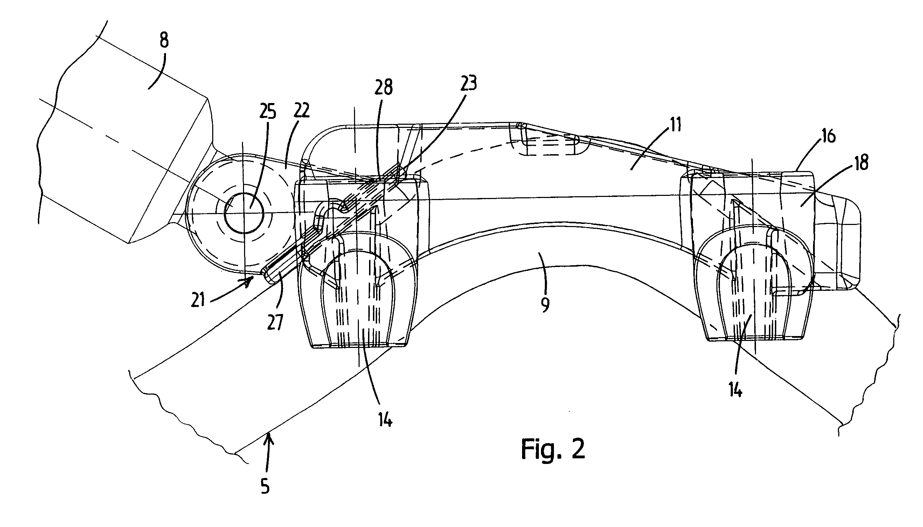

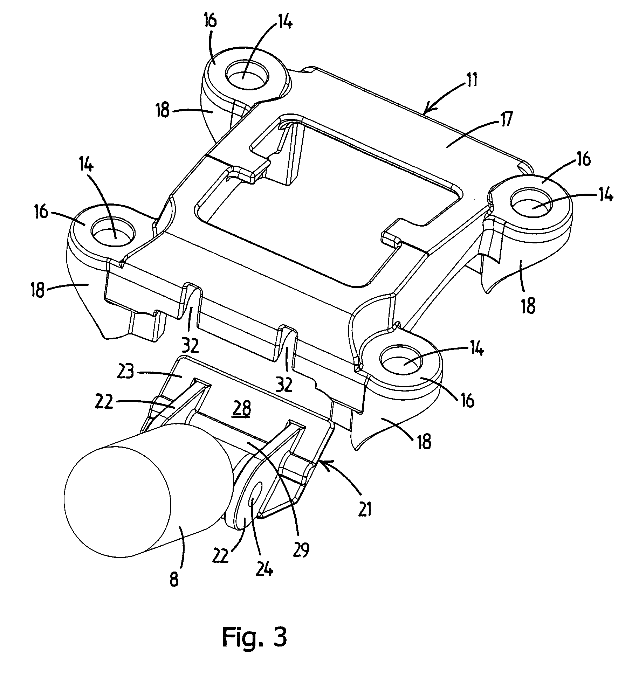

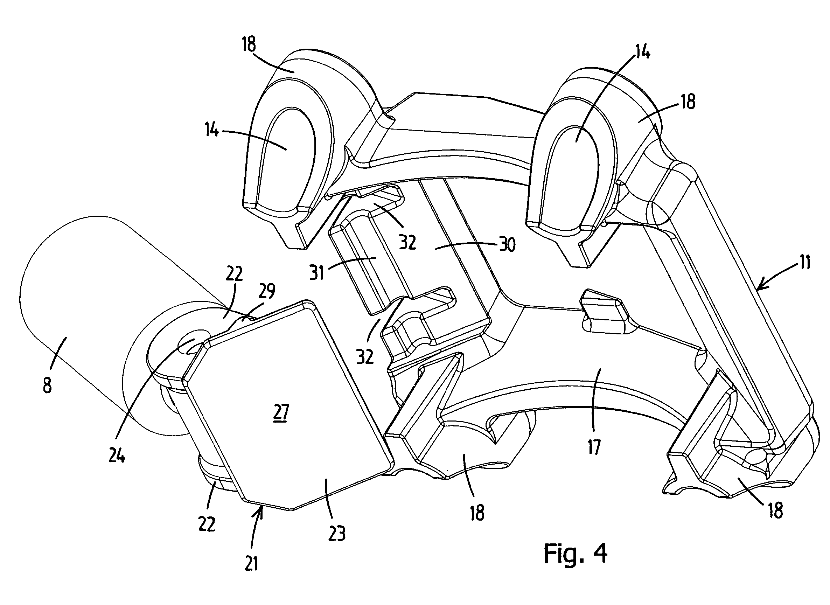

The supporting plate 11, which is illustrated in more detail in Figs. 2-4, is mounted on the upper side of the carrying arm, opposite the axle body 1, and, on the side facing the carrying arm 5, has a curved shape which matches the shape of the curved section 9 of the carrying arm. The U-shaped brackets 12 are attached around the axle body 1 on both sides of the carrying arm 5 and their free end parts are directed upwards. These free end parts, which are threaded, extend through bores 14 in the supporting plate 11. Nuts 15 are screwed onto the threaded free end parts of the brackets 12 protruding above the supporting plate. These nuts 15 rest on the supporting surfaces 16 on the upper side of the supporting plate 11.

The bores 14 in the supporting plate 11 are disposed in protruding sections 18 of the supporting plate 11 which extend from a centre section 17 of the supporting plate 11 which lies on top of the carrying arm 5 on both sides of the carrying arm 5. The supporting surfaces 16 for the nuts 15 are at least partially arranged on top of protruding sections 18.

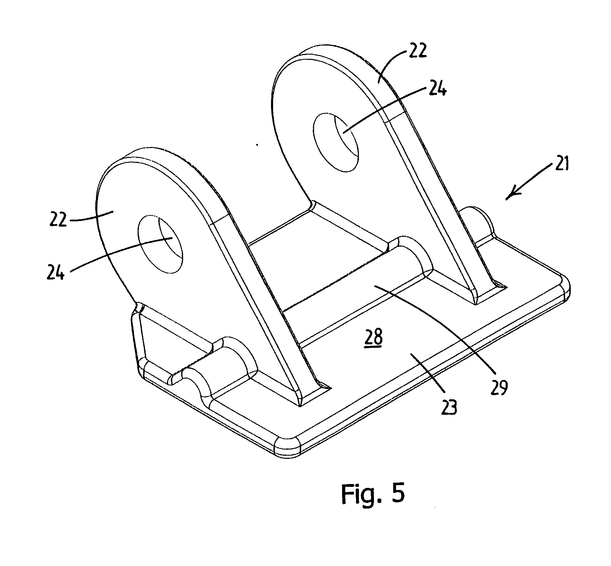

The connection 11 according to the invention furthermore comprises a separate shock absorber attachment part 21 which is formed by two lips 22 which are at a distance from one another and a plate-shaped part 23 on which the lips are fixedly fastened (see Figs. 2-5).

The lips 22 are each provided with a bore 24, said bores 24 having a common centre axis. The purpose of the lips 24 is to attach the shock absorber 8 by means of the fastening bolt 25 extending through the bores 24 (see Figs. 1 and 2). On the other side, the shock absorber 8 is fastened to the carrying bracket 3 by means of a fastening bolt 26 (see Fig. 1).

The plate-shaped part 23 is designed to be clamped between the carrying arm 5 and the supporting plate 11, as is indicated in Fig. 2. In this manner, the shock absorber 8 can be connected firmly to the carrying arm 5. On the side remote from the lips 22, the plate-shaped part 23 is provided with a first bearing surface 27 which, in the fitted state of the connection, bears against the carrying arm 5 in a fitted manner, and on the side of the lips 22 provided with a second bearing surface 28 which bears against the supporting plate 11 in a fitted manner.

The second bearing surface 28 is provided with a positioning protrusion 29 and the section 30 of the supporting plate 11 which bears against the second bearing surface 28 is provided with a positioning recess 31 which complements the positioning protrusion 29. In the embodiment shown, the positioning protrusion 29 is in the shape of a rib 29 which extends over the entire width of the plate-shaped part 23 parallel to the centre axis of the bores 24 in the lips 22. The section 30 of the supporting plate 11 is furthermore provided with two slots 32 into which the lips 22 drop.

The positioning protrusion 29 and the positioning recess 31 are shaped in such a manner that, in the fitted connection, the clamping forces are concentrated around the positioning protrusion 29 and the positioning recess 31, so that the shock absorber attachment part 21 is substantially clamped securely at that location. As a result, tolerances in the carrying arm 5 and the supporting plate 11 can be absorbed and undesirable stress concentrations can be avoided.

The use of a separate shock absorber attachment part 21 has a number of advantages. A deformation of the supporting plate 11 during the installation of the connection has no effect on the position of the lips 22 for attaching the shock absorber 8, so that no or much lower internal material stresses develop in the lips 22 when the shock absorber is being mounted. Moreover, it is possible to use different shock absorber attachment parts 21 corresponding to different positions of the absorber with one and the same supporting plate 11. As a result, the supporting plate 11 can be used more widely. Furthermore, the surface treatments for the supporting plate 11 and the shock absorber attachment part 21 can be different, which may be an advantage in practice.

## Claims

1. Connection between an axle body of a wheel axle of a vehicle and an axle carrying arm which extends in the longitudinal direction of the vehicle and crosses the axle body substantially at right angles, comprising a supporting plate which is mounted on the carrying arm on the side of the carrying arm remote from the axle body, and clamping means which fixedly connect the supporting plate, the carrying arm and the axle body to one another, the connection furthermore comprising a shock absorber attachment part on the side of the supporting plate for attaching a shock absorber, which shock absorber attachment part comprises two lips which are at a distance from one another and are each provided with a bore, said bores having a common centre axis, **characterized in that** the shock absorber attachment part is a separate component which is formed by the two lips and a plate-shaped part on which the two lips are fixedly fastened and **in that** the plate-shaped part is designed to be clamped between the carrying arm and the supporting plate.

2. Connection according to claim 1, in which, on the side remote from the lips, the plate-shaped part is provided with a first bearing surface which, in the fitted state of the connection, bears against the carrying arm in a fitted manner, and on the side of the lips is provided with a second bearing surface which bears against the supporting plate in a fitted manner.

3. Connection according to claim 2, in which the second bearing surface is provided with a positioning protrusion and the section of the supporting plate which bears against the second bearing surface is provided with a positioning recess which complements the positioning protrusion.

4. Connection according to claim 3, in which the positioning protrusion is in the shape of a rib which extends over substantially the entire width of the plate-shaped part parallel to the centre axis of the bores in the lips.
